# DEMANDE DE BREVET EUROPEEN

(11) **EP 2 309 581 A1**
(43) Date de publication de la demande: **13.04.2011**
(21) Numéro de dépôt: 10173757.5
(22) Date de dépôt: 23.08.2010
(51) Int. Cl.: H01M 10/04, H01M 10/0525, H01M 10/0562, H01M 10/0585, H01M 2/02, H01M 6/40, H01M 4/38, H01M 4/485, H01M 4/525, H01M 4/58, H01M 4/587, H01M 4/66, H01M 4/04

(54) **Procédé de formation d'une batterie lithium-ion verticale en couches minces**

(30) Priorité: 28.09.2009 FR 0956676
(71) Demandeur: STMicroelectronics (Tours) SAS, 37100 Tours (FR)
(72) Inventeur: Bouillon, Pierre, 37230 LUYNES (FR)
(74) Mandataire: de Beaumont, Michel

(57) **Abrégé**

L'invention concerne un procédé de formation d'une batterie de type lithium-ion, comprenant les étapes suivantes :
(a) former, sur un substrat au moins localement conducteur (10), une couche isolante (12) comprenant une ouverture traversante ;
(b) déposer successivement et de façon conforme, un empilement comprenant une couche de collecteur de cathode (18), une couche de cathode (20), une couche d'électrolyte (22) et une couche d'anode (24), cet empilement ayant une épaisseur inférieure à l'épaisseur de la couche isolante ;
(c) former, sur la structure, une couche de collecteur d'anode (28) remplissant l'espace restant dans l'ouverture ; et
(d) réaliser une planarisation de la structure pour faire apparaître la surface supérieure de la couche isolante (12).

## Description

### Domaine de l'invention

La présente invention concerne un procédé de formation d'une batterie de type lithium-ion verticale en couches minces.

### Exposé de l'art antérieur

Les batteries de type lithium-ion ont l'avantage de comporter un électrolyte solide non-inflammable qui présente, de plus, une conductivité ionique bonne sur une grande gamme de températures. De telles batteries pourraient avantageusement être utilisées dans des dispositifs électroniques mobiles tels que les téléphones ou ordinateurs portables.

Pour réaliser des batteries lithium-ion en couches minces, typiquement des batteries ayant des dimensions de 2,5 x 2,5 cm, il est connu d'utiliser des techniques de pulvérisation au travers d'un pochoir ("shadow mask" en anglais). Ces techniques consistent à placer un pochoir ou masque au-dessus d'un support et à pulvériser, au travers de ce masque, les différentes couches constitutives de la batterie.

Cependant, pour une production à grande échelle de batteries de type lithium-ion en couches minces, l'utilisation de pochoirs implique un coût relativement élevé. En effet, à chaque pulvérisation mettant en jeu un masque, le composant pulvérisé se dépose également sur le masque. Ainsi, entre chaque utilisation du masque, il est nécessaire d'éliminer et de recycler les différentes couches déposées sur ce masque.

Les techniques de formation de batteries par pulvérisation au travers d'un pochoir ont également l'inconvénient de ne pas être adaptées pour former des batteries ayant des dimensions plus faibles (inférieures à 3 mm de côté), des problèmes d'alignement des masques apparaissant pour de telles dimensions. Or, ces batteries pourraient avantageusement être utilisées comme batteries de sauvegarde pour sauvegarder des données clefs dans des mémoires en cas de défaillance d'une batterie principale.

Pour former des batteries de type lithium-ion de petites tailles, on pourrait penser à adapter des techniques de lithographie bien connues et maîtrisées dans le domaine des circuits intégrés. Cependant, ces techniques coûtent relativement cher si elles sont appliquées sur des grandes surfaces de substrat. De plus, les procédés de lithographie nécessitent l'utilisation de résines que l'on élimine par des traitements humides (généralement des mélanges aqueux à base de solvants) qui provoqueraient des réactions chimiques avec les couches très réactives à base de lithium de la batterie. Ces techniques sont donc complexes à mettre en oeuvre pour la fabrication de batteries de type lithium-ion.

Ainsi, un besoin existe d'un procédé permettant de former des batteries de type lithium-ion en technologie de couches minces, relativement bon marché, et adapté à la présence des matériaux très réactifs constitutifs de ces batteries.

### Résumé

Un objet d'un mode de réalisation de la présente invention est de prévoir un procédé permettant de former une batterie de type lithium-ion verticale en couches minces, compatible avec la réactivité des matériaux présents dans ces batteries.

Un autre objet d'un mode de réalisation de la présente invention est de prévoir un procédé permettant de former des batteries de type lithium-ion verticales en couches minces de petites dimensions à un coût raisonnable.

Ainsi, un mode de réalisation de la présente invention prévoit un procédé de formation d'une batterie de type lithium-ion comprenant les étapes suivantes : (a) former, sur un substrat au moins localement conducteur, une couche isolante comprenant une ouverture traversante ; (b) déposer successivement et de façon conforme un empilement comprenant une couche de collecteur de cathode, une couche de cathode, une couche d'électrolyte et une couche d'anode, cet empilement ayant une épaisseur inférieure à l'épaisseur de la couche isolante ; (c) former, sur la structure, une couche de collecteur d'anode remplissant l'espace restant dans l'ouverture ; et (d) réaliser une planarisation de la structure pour faire apparaître la surface supérieure de la couche isolante.

Selon un mode de réalisation de la présente invention, le procédé comprend en outre, après l'étape (d), des étapes de formation d'au moins une couche de protection sur la structure, d'une ouverture dans ladite couche de protection au-dessus de la couche de collecteur d'anode, et d'une région conductrice dans l'ouverture de la couche de protection et au-dessus d'une partie de la couche de protection.

Selon un mode de réalisation de la présente invention, le procédé comprend en outre une étape de formation d'un premier contact sur la couche conductrice et d'un second contact sur le substrat.

Selon un mode de réalisation de la présente invention, le procédé comprend en outre, avant l'étape (c), une étape de formation d'une couche d'accrochage.

Selon un mode de réalisation de la présente invention, la couche de collecteur d'anode est formée par croissance électrolytique à basse température sur la couche d'accrochage, la couche d'accrochage étant constituée d'un empilement de titane et de cuivre.

Selon un mode de réalisation de la présente invention, le substrat est en silicium dopé ou en métal, la couche de collecteur de cathode est en titane, en tungstène, en molybdène, en tantale, en platine ou en un alliage ou un empilement de ces matériaux, la couche de cathode est en oxysulfure de titane et de lithium (LiTiOS), en oxyde de cobalt et de lithium (LiCoO₂) ou en tout matériau susceptible d'insérer du lithium, la couche d'électrolyte est en oxynitrure phosphoré de lithium (LiPON), la couche d'anode est en silicium, en germanium, en carbone ou en un empilement ou en un alliage de ces matériaux et la couche de collecteur d'anode est en cuivre.

Selon un mode de réalisation de la présente invention, la couche de collecteur de cathode, la couche de cathode, la couche d'électrolyte et la couche d'anode sont formées par pulvérisation en phase vapeur (PVD).

Selon un mode de réalisation de la présente invention, la couche de protection est constituée d'un empilement d'une première couche en une céramique, en Al₂O₃, en SiN, ou en ZrO₂ et d'une seconde couche en SiO₂.

Selon un mode de réalisation de la présente invention, la couche isolante a une épaisseur comprise entre 5 et 30 µm, la couche de collecteur de cathode a une épaisseur comprise entre 100 et 500 nm, la couche de cathode a une épaisseur comprise entre 1 et 10 µm, la couche d'électrolyte a une épaisseur comprise entre 1 et 3 µm et la couche d'anode a une épaisseur comprise entre 10 et 800 nm.

Un mode de réalisation de la présente invention prévoit en outre une batterie de type lithium-ion, comprenant : un substrat au moins localement conducteur, sur lequel s'étend une couche isolante comportant une première ouverture traversante et, le long des parois et du fond de l'ouverture, un empilement d'une couche de collecteur de cathode, d'une couche de cathode, d'une couche d'électrolyte, d'une couche d'anode et d'une couche de collecteur d'anode, l'empilement remplissant la première ouverture.

### Brève description des dessins

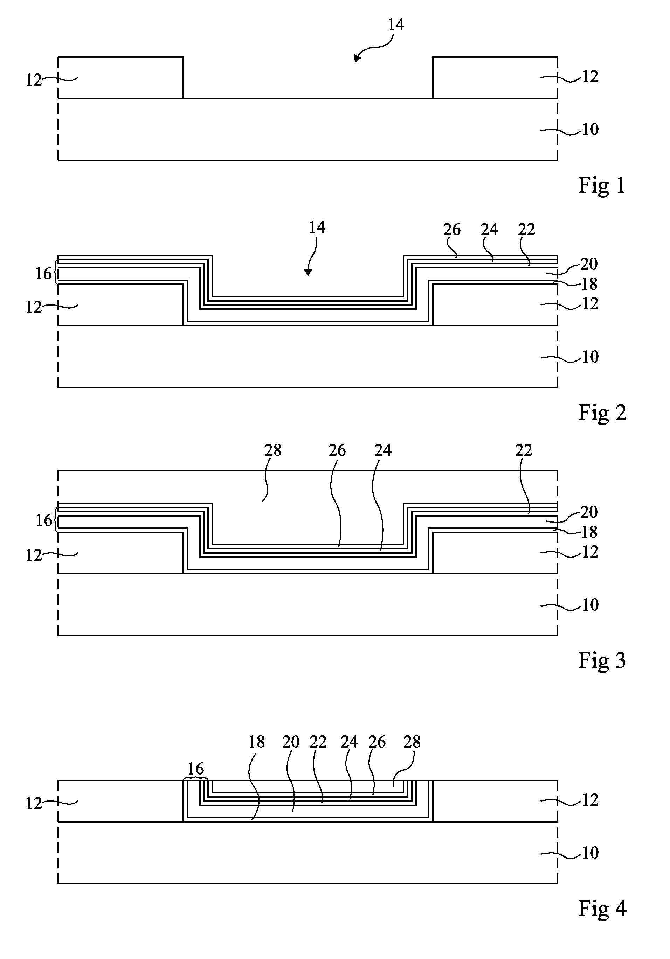

Ces objets, caractéristiques et avantages, ainsi que d'autres seront exposés en détail dans la description suivante de modes de réalisation particuliers faite à titre non-limitatif en relation avec les figures jointes parmi lesquelles les figures 1 à 7 illustrent des résultats d'étapes d'un procédé selon un mode de réalisation de la présente invention.

Par souci de clarté, de mêmes éléments ont été désignés par de mêmes références dans les diverses figures et, de plus, comme cela est habituel dans la représentation de composants de petites dimensions à couches minces, les diverses figures ne sont pas tracées à l'échelle.

### Description détaillée

Les figures 1 à 7 illustrent des résultats d'étapes d'un procédé de formation d'une batterie de type lithium-ion.

A l'étape illustrée en figure 1, on part d'une structure comprenant un substrat conducteur 10 sur lequel est formée une couche de matériau isolant 12. Une ouverture 14 est formée dans la couche de matériau isolant sur toute son épaisseur. A titre d'exemple, le substrat 10 peut avoir une épaisseur comprise entre 500 et 800 µm et peut être en silicium dopé ou encore en un métal. La couche isolante 12 peut être en oxyde de silicium.

Pour obtenir cette structure, on peut déposer une couche isolante sur l'ensemble du substrat conducteur 10 puis graver cette couche par lithographie pour former l'ouverture 14, à l'aide d'une résine dans laquelle on forme au préalable un motif adapté. De préférence, la couche d'oxyde a une épaisseur comprise entre 5 et 30 µm.

On notera que, en figure 1 et dans les figures qui suivent, une seule cellule élémentaire formant une batterie de type lithium-ion est représentée. On comprendra que de nombreuses batteries pourront être formées les unes à côté des autres sur le substrat 10. Les régions isolantes 12 permettent, entre autre, de délimiter les différentes batteries élémentaires. A titre d'exemple, les régions actives de deux batteries adjacentes peuvent être séparées d'une distance inférieure à 1 mm, par exemple comprise entre 200 et 500 µm. On notera que le chemin de découpe entre chaque batterie élémentaire pourra être inférieur à 100 µm.

A l'étape illustrée en figure 2, un empilement 16 des différentes couches constitutives d'une batterie de type lithium-ion est formé sur le dispositif de la figure 1, sur la surface supérieure et les parois des portions isolantes 12 et sur la surface apparente du substrat conducteur 10. L'empilement 16 peut être formé par une succession de pulvérisations en phase vapeur (PVD).

L'empilement 14 comprend les couches ci-après.
- Une première couche 18 formant un collecteur de cathode. Cette couche peut être, à titre d'exemple, en titane, en tungstène, en molybdène, en tantale, en platine ou en un alliage ou un empilement de ces matériaux et avoir une épaisseur comprise entre 100 et 500 nm.
- Une deuxième couche 20 formant la cathode de la batterie, constituée d'un matériau tel que du LiTiOS (oxysulfure de titane et de lithium), du LiCoO₂ (oxyde de cobalt et de lithium) ou du LiFePO₄ (phosphate de fer et de lithium), ayant une épaisseur comprise entre 1 et 10 µm. Plus généralement, la couche 20 pourra être en tout matériau d'insertion de lithium utilisable comme cathode dans les batteries de type lithium-ion.
- Une troisième couche 22 formant l'électrolyte de la batterie, constituée par exemple de LiPON (oxynitrure phosphoré de lithium) ou de tout autre matériau propre à former un électrolyte solide d'une pile lithium-ion. La troisième couche 22 a une épaisseur comprise entre 1 et 3 µm.
- Une quatrième couche 24 formant l'anode de la batterie, par exemple en silicium, en germanium, en carbone ou en un empilement ou un alliage de ces matériaux. La quatrième couche a une épaisseur comprise entre 10 et 800 nm.

Ainsi, l'empilement 16 des couches 18 à 24 formant la partie active de la batterie de type lithium-ion peut avoir une épaisseur comprise entre 5 et 15 µm, cette épaisseur étant inférieure à l'épaisseur de la couche isolante 12.

Sur l'empilement 16 est formée une cinquième couche 26 formant une couche d'accrochage pour le collecteur d'anode ("seed layer" en anglais). A titre d'exemple, cette couche peut être formée d'un empilement de titane et de cuivre. Cette couche forme également une barrière protectrice pour les couches inférieures de l'empilement, et principalement pour les couches 22 et 24 constituées de composés de lithium particulièrement réactifs. A titre d'exemple, la couche d'accrochage 26 peut avoir une épaisseur comprise entre 100 et 300 nm. On notera que la couche d'accrochage 26 pourra ne pas être prévue si le matériau formant la couche de collecteur d'anode est adapté à être formé directement sur l'anode de la batterie.

A l'étape illustrée en figure 3, on a formé, par une croissance électrolytique à basse température (pour ne pas provoquer de réaction des couches formées de composés de lithium) et sur la couche d'accrochage 26, une couche de collecteur d'anode 28, par exemple en cuivre. La croissance électrolytique est prévue de façon que le cuivre 28 remplisse complètement l'espace restant dans l'ouverture 14 et se forme également en surface des portions de la couche 26 situées au dessus des régions isolantes 12.

A l'étape illustrée en figure 4, on a réalisé une planarisation ou polissage de la structure de la figure 3 pour éliminer toutes les couches situées au dessus de la surface supérieure des portions de matériaux isolant 12 et ainsi laisser apparaître ce matériau isolant.

Pour réaliser cette planarisation, on pourra utiliser tout procédé de type polissage mécano-chimique (CMP) ou purement mécanique connu. De plus, pour éliminer les différentes couches de l'empilement 16, on pourra utiliser successivement différents composants de planarisation (slurry). Pour ne pas faire réagir les matériaux des couches 20 et 22, on utilisera des composés de planarisation non aqueux.

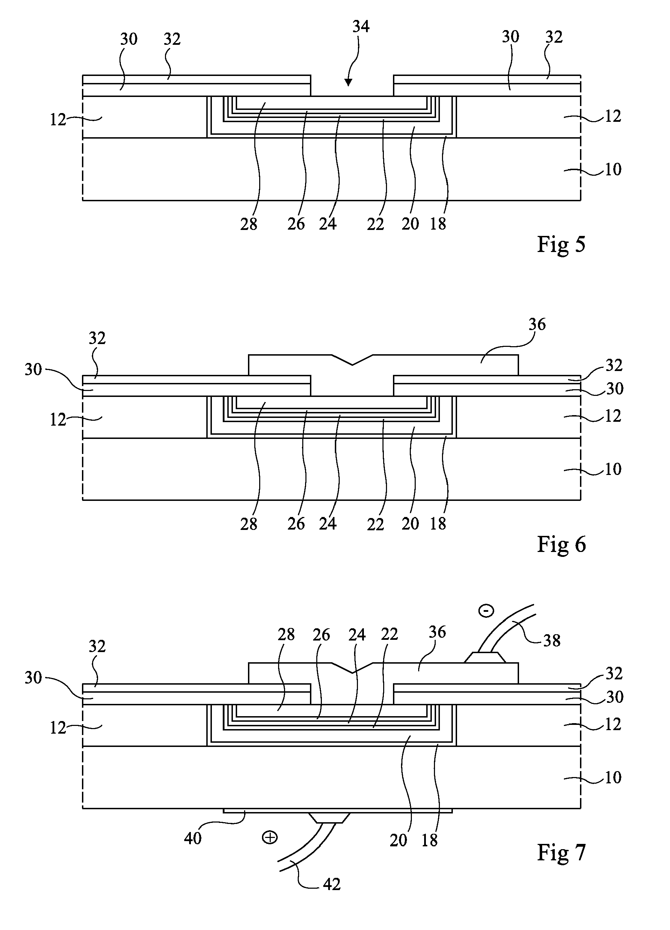

A l'étape illustrée en figure 5, on a formé une couche de protection isolante sur l'ensemble du dispositif. Dans l'exemple représenté, cette protection est constituée d'un empilement de deux couches 30 et 32. L'empilement 30/32 a pour but de protéger les portions de matériaux réactifs de l'empilement 16 qui sont, à l'étape de la figure 4, en contact avec l'air (couches 20 et 22). Pour cela, la première couche 30 déposée sur l'ensemble de la structure peut être une céramique, de l'Al₂O₃, du SiN, du ZrO₂, ou tout autre matériau susceptible de constituer une barrière à l'humidité et à la diffusion du lithium. La couche 32, quant à elle, est une couche de passivation qui permet de compléter le premier niveau de barrière à l'humidité assurée par la couche 30, sans être nécessairement une barrière à la diffusion du lithium. A titre d'exemple, la couche 32 pourra être en SiO₂. De préférence, la couche 30 a une épaisseur de quelques dizaines de nanomètres et la couche 32 a une épaisseur de l'ordre de 1 µm.

Une ouverture 34 est formée dans l'empilement 30/32, au-dessus d'une portion de la couche de collecteur anodique 28. De préférence, l'ouverture 34 présente une largeur comprise entre 50 et 500 µm. L'ouverture 34 permet de prendre contact sur la couche de collecteur anodique 28. A titre d'exemple, l'ouverture 34 peut être formée par lithographie, l'utilisation d'un tel procédé étant rendue possible du fait de la présence de l'empilement 30/32 de protection des couches actives de la batterie.

A l'étape illustrée en figure 6, on a formé une métallisation 36 au niveau de l'ouverture 34 et sur une région de l'empilement 30/32. La métallisation 36 forme une reprise de contact sur la région de collecteur anodique 28. A titre d'exemple, la métallisation 36 peut être formée par un dépôt pleine plaque d'une couche métallique ou conductrice puis par gravure de cette couche de façon adaptée. La métallisation 36 peut être formée d'un empilement d'aluminium et de tantale, d'aluminium et de titane, ou encore d'aluminium et de nitrure de tantale.

A l'étape illustrée en figure 7, une encapsulation de l'ensemble du dispositif de la figure 6 a été réalisée (non représentée) et des contacts ont été formés de part et d'autre de la batterie. A titre d'exemple, l'encapsulation peut être réalisée en déposant, sur l'ensemble de la structure, un empilement d'oxyde de silicium et de nitrure de silicium, du BCB, une résine photosensible polymérisable, etc. Une ouverture (non représentée) est ensuite formée dans la couche d'encapsulation pour permettre la formation d'un premier contact 38 sur la couche de métallisation 36 (contact d'anode). Le contact 38 peut être formé sur la métallisation 36 par tout procédé connu, par exemple un procédé de type soudure par fil (wire-bonding).

Un second contact, de cathode, est formé sur la face inférieure du substrat 10, en regard de l'empilement de couches 18 à 28. Par exemple, on peut former une région conductrice 40 sur la face inférieure du substrat 10 et souder un fil 42 sur la région conductrice 40. On notera que, à titre de variante, le contact inférieur pourra également être formé en reportant la batterie sur un support en surface duquel sont formées des pistes conductrices.

On obtient ainsi une batterie élémentaire de type lithium-ion, verticale, formée en couches minces. Une étape de découpe des batteries élémentaires est ensuite réalisée. Avantageusement, le procédé présenté ici prévoit un enchaînement d'étapes réalisé à basses températures (inférieures à 300°C), ce qui est compatible avec la présence de couches en des matériaux composés de lithium réactifs et évite la dégradation de ces matériaux.

Des modes de réalisation particuliers de la présente invention ont été décrits. Diverses variantes et modifications apparaîtront à l'homme de l'art. En particulier, on notera que la structure initiale de la figure 1 pourra également être obtenue en formant une tranchée dans un substrat isolant que l'on rend localement conducteur, au niveau de la tranchée, pour permettre la formation du contact 40 sur la face arrière du substrat.

De plus, les matériaux utilisés pour la formation de l'empilement actif de la batterie pourront être différents de ceux mentionnés ci-dessus, à savoir tout matériau connu permettant la formation des batteries de type lithium-ion en couches minces.

## Revendications

1. Procédé de formation d'une batterie de type lithium-ion, comprenant les étapes suivante :
(a) former, sur un substrat au moins localement conducteur (10), une couche isolante (12) comprenant une ouverture traversante (14) ;
(b) déposer successivement et de façon conforme, un empilement (16) comprenant une couche de collecteur de cathode (18), une couche de cathode (20), une couche d'électrolyte (22) et une couche d'anode (24), cet empilement ayant une épaisseur inférieure à l'épaisseur de la couche isolante ;
(c) former, sur la structure, une couche de collecteur d'anode (28) remplissant l'espace restant dans l'ouverture (14) ; et
(d) réaliser une planarisation de la structure pour faire apparaître la surface supérieure de la couche isolante (12).

2. Procédé selon la revendication 1, comprenant en outre, après l'étape (d), les étapes suivante :
former au moins une couche de protection (30, 32) sur la structure et définir une ouverture (34) dans ladite couche de protection, au-dessus de la couche de collecteur d'anode (28) ; et
former une région conductrice (36) dans l'ouverture de la couche de protection et au-dessus d'une partie de la couche de protection.

3. Procédé selon la revendication 2, comprenant en outre une étape de formation d'un premier contact (38) sur la couche conductrice (28) et d'un second contact (42) sur le substrat (10).

4. Procédé selon l'une quelconque des revendications 1 à 3, comprenant en outre, avant l'étape (c), une étape de formation d'une couche d'accrochage (26).

5. Procédé selon la revendication 4, dans lequel la couche de collecteur d'anode (28) est formée par croissance électrolytique à basse température sur la couche d'accrochage (26), la couche d'accrochage étant constituée d'un empilement de titane et de cuivre.

6. Procédé selon l'une quelconque des revendications 2 à 5, dans lequel le substrat (10) est en silicium dopé ou en métal, la couche de collecteur de cathode (18) est en titane, en tungstène, en molybdène, en tantale, en platine ou en un alliage ou un empilement de ces matériaux, la couche de cathode (20) est en oxysulfure de titane et de lithium (LiTiOS), en oxyde de cobalt et de lithium (LiCoO₂) ou en tout matériau susceptible d'insérer du lithium, la couche d'électrolyte (22) est en oxynitrure phosphoré de lithium (LiPON), la couche d'anode (24) est en silicium, en germanium, en carbone ou en un empilement ou en un alliage de ces matériaux et la couche de collecteur d'anode (28) est en cuivre.

7. Procédé selon l'une quelconque des revendications 1 à 6, dans lequel la couche de collecteur de cathode (18), la couche de cathode (20), la couche d'électrolyte (22) et la couche d'anode (24) sont formées par pulvérisation en phase vapeur (PVD).

8. Procédé selon l'une quelconque des revendications 2 à 7, dans lequel la couche de protection est constituée d'un empilement d'une première couche (30) en une céramique, en Al₂O₃, en SiN, ou en ZrO₂ et d'une seconde couche (32) en SiO₂.

9. Procédé selon l'une quelconque des revendications 1 à 8, dans lequel la couche isolante a une épaisseur comprise entre 5 et 30 µm, la couche de collecteur de cathode (18) a une épaisseur comprise entre 100 et 500 nm, la couche de cathode (20) a une épaisseur comprise entre 1 et 10 µm, la couche d'électrolyte (22) a une épaisseur comprise entre 1 et 3 µm et la couche d'anode (24) a une épaisseur comprise entre 10 et 800 nm.

10. Batterie de type lithium-ion, comprenant :
un substrat (10) au moins localement conducteur, sur lequel s'étend une couche isolante (12) comportant une première ouverture traversante (14) ; et
le long des parois et du fond de l'ouverture (14), un empilement d'une couche de collecteur de cathode (18), d'une couche de cathode (20), d'une couche d'électrolyte (22), d'une couche d'anode (24) et d'une couche de collecteur d'anode (28), l'empilement remplissant la première ouverture.
